Europäisches Patentamt

European Patent Office

Office européen des brevets

(19)

(11) **EP 0 871 344 A2**

(12) **EUROPÄISCHE PATENTANMELDUNG**

(43) Veröffentlichungstag:
**14.10.1998 Patentblatt 1998/42**

(51) Int Cl.⁶: **H04Q 11/04**, H04L 12/46

(21) Anmeldenummer: **98201031.6**

(22) Anmeldetag: **01.04.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **12.04.1997 DE 19715262**

(71) Anmelder:
• **Philips Patentverwaltung GmbH**
  **22335 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder:
• **Herrmann, Christoph, Dr.-Ing.**
  **Röntgenstrasse 24, 22335 Hamburg (DE)**
• **Du, Yongang, Dr.-Ing.Dr.-Ing.**
  **Röntgenstrasse 24, 22335 Hamburg (DE)**
• **May, Klaus Peter**
  **Röntgenstrasse 24, 22335 Hamburg (DE)**

(74) Vertreter: **Volmer, Georg, Dipl.-Ing. et al**
  **Philips Patentverwaltung GmbH,**
  **Röntgenstrasse 24**
  **22335 Hamburg (DE)**

(54) **Lokales Netzwerk zur Rekonfigurierung bei Leitungsbrüchen oder Knotenausfall**

(57) Die Erfindung bezieht sich auf ein lokales nach dem asynchronen Transfermodus (ATM) arbeitendes Netzwerk zur Übertragung von Zellen mit mehreren Netzknoten, die jeweils zur Schaltung einer Schleife bei einem Defekt einer zugeordneten Sendeleitung (18, 22) oder eines benachbarten Netzknotens vorgesehen sind. Zur Rekonfigurierung des Netzwerkes nach einem Leitungsbruch oder einem Knotenausfall, ist ein einen Defekt detektierender Netzknoten zur Sendung einer Zelle mit einer Meldung erster Art über den Ort des Defekts an alle anderen betroffenen Netzknoten vorgese-hen. Der den Defekt detektierende und jeder die Meldung erster Art empfangende Netzknoten trägt den Ort des Defekts in einer jeweils zugeordneten Statustabelle ein. Nach Auswertung der jeweiligen Statustabelle in ei-nem Netzknoten sind die Netzknoten zur Schaltung ei-ner Schleife vorgesehen, die aufgrund des Defekts nicht weiter zum Austausch von Zellen mit einem benachbarten Netzknoten dienen oder deren Sendeleitung (18, 22) einen Defekt aufweist.

FIG. 3

**Beschreibung**

Lokales Netzwerk zur Rekonfigurierung bei Leitungsbrüchen oder Knotenausfall

Die Erfindung bezieht sich auf ein lokales nach dem asynchronen Transfermodus (ATM) arbeitendes Netzwerk zur Übertragung von Zellen mit mehreren Netzknoten, die jeweils zur Schaltung einer Schleife bei einem Defekt einer zugeordneten Sendeleitung oder eines benachbarten Netzknotens vorgesehen sind.

Ein solches lokales Netzwerk (LAN), welches nach dem asynchronen Transfermodus arbeitet, ist aus der DE 195 32 422 C1 bekannt. Dieses Netzwerk enthält mehrere Ringsysteme mit mehreren Netzknoten, die in einem Ringsystem über einen einzelnen oder über einen Doppelring miteinander gekoppelt sind. Die Netzknoten weisen Stationsanschlüsse auf, über die sie entweder mit einer Station oder mit einem anderen Netzwerk gekoppelt sind. Bei einem Knotenausfall oder Leitungsbruch informiert der diesen Defekt detektierende Netzknoten ein Netzwerkmanagementsystem über den Ort des Leitungsbruches. Ein Netzknoten stellt hierbei dann einen Knotenausfall oder Leitungsbruch fest, wenn dieser über eine Leitung eines Rings keine Zellen mehr von einem benachbarten Netzknoten erhält. Das Netzwerkmanagementsystem steuert die Rekonfigurierung des Netzwerkes, indem diese den Netzknoten informiert, dessen Sendeleitung einen Defekt aufweist. Dieser Netzknoten schaltet dann eine Schleife, so daß Zellen nicht mehr zu der defekten Leitung sondern zum anderen Ring geleitet werden.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (53 Bytes) aufweist. Jede Zelle besteht aus einem Kopffeld mit einer Länge von 5 Byte und einem Informationsfeld, in dem die Nutzinformation untergebracht ist, mit einer Länge von 48 Byte. In einem solchen Kopffeld sind Adreßinformationen, Daten zur Fehlererkennung und Daten für Steuerinformationen vorhanden. Unter Adreßinformationen fallen Bündelkennungen und Verbindungskennungen. Zur Übermittlung einer Zelle wird anhand der Verbindungskennung, die auch als VCI (Virtual Channel Identifier) bezeichnet wird, ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad (VPI = Virtual Path Identifier) bezeichnet, der durch die Bündelkennung gekennzeichnet wird.

Der Erfindung liegt die Aufgabe zugrunde, ein lokales, nach dem asynchronen Transfermodus arbeitendes Netzwerk zu schaffen, bei welchem auch bei wenigstens einem Leitungsbruch oder Knotenausfall auf eine andere Art eine Rekonfigurierung des Netzwerkes durchgeführt wird.

Die Aufgabe wird durch ein lokales, nach dem asynchronen Transfermodus arbeitendes Netzwerk der eingangs genannten Art dadurch gelöst, daß ein einen Defekt detektierender Netzknoten zur Sendung einer Zelle mit einer Meldung erster Art über den Ort des Defekts an alle anderen betroffenen Netzknoten vorgesehen ist, daß der den Defekt detektierende und jeder die Meldung erster Art empfangende Netzknoten zur Eintragung des Ortes des Defekts in einer jeweils zugeordneten Statustabelle vorgesehen ist und daß nach Auswertung der jeweiligen Statustabelle in einem Netzknoten die Netzknoten zur Schaltung einer Schleife vorgesehen sind, die aufgrund des Defekts nicht weiter zum Austausch von Zellen mit einem benachbarten Netzknoten dienen oder deren Sendeleitung einen Defekt aufweist.

Der Erfindung liegt die Idee zugrunde, daß ein den Ausfall eines Netzknotens oder einen Leitungsbruch detektierender Netzknoten alle anderen betroffenen Netzknoten über diesen Defekt mittels einer Meldung erster Art informiert, so daß diese das Wissen haben, daß beispielsweise mit bestimmten Teilnehmern keine Verbindung mehr aufgebaut werden kann. Ein Netzknoten kann nicht genau bestimmen, ob ein Leitungsbruch oder ein Knotenausfall vorliegt. Es kann beispielsweise nur über einen Synchronisationsverlust oder durch Versendung bestimmter Zellen festgestellt werden, daß der detektierende Netzknoten keine Zellen mehr über seine Empfangsleitung von einem benachbarten Knoten erhält. Der einen Defekt detektierende Netzknoten sendet daraufhin eine Meldung erster Art, die eine Information über einen Fehler auf einer Sendeleitung des benachbarten Knotens enthält, zu allen anderen erreichbaren und betroffenen Netzknoten. Betroffen sind beispielsweise alle Knoten eines Ringsystems in dem lokalen Netzwerk.

Ein Netzknoten, welcher die Meldung erster Art erhält, trägt deren Inhalt in eine zugeordnete Statustabelle ein und stellt nach einer Auswertung fest, wo der Ort des Defektes liegt und ob er eine Aktion durchführen muß. Falls der Netzknoten feststellt, daß beispielsweise er mit einem anderen Netzknoten keine Zellen mehr austauschen kann, d. h., daß er keine Zellen mehr von dem anderen Netzknoten empfangen und zu ihm senden kann, wird eine Schleife geschaltet. Es wird weiterhin eine Schleife in dem Netzknoten geschaltet, dessen Sendeleitung einen Defekt aufweist. Darüberhinaus treten auch Fälle auf, bei denen ein Netzknoten eine Schleife schalten muß, auch wenn eine Sendeleitung noch intakt ist.

Um einem Netzknoten die Identifikation des Ortes des Fehlers zu ermöglichen, sendet der einen Defekt detektierende Netzknoten eine Meldung erster Art aus, die Angaben über den Netzknoten, der eine keine Zellen mehr liefernde Sendeleitung aufweist, und über den Ring, zu welchem die keine Zellen mehr übertragende Sendeleitung gehört, enthält. Der einen Fehler detektierende Netzknoten stellt dabei fest, von welcher Empfangsleitung er keine Zellen mehr erhält.

In den Patentansprüchen 3 und 4 ist angegeben, wie eine solche Schleife geschaltet wird. Diese kann entweder vom inneren zum äußeren Ring oder umgekehrt verlaufen. Der Patentanspruch 3 gibt den Fall an, wenn eine Sendeleitung defekt ist. Der Patentanspruch 4 betrifft den Fall, wenn ein Knoten mit einem benachbarten Knoten oder einer benachbarten Gruppe keine Zellen mehr austauschen kann. Nach einer Schleifenaktion werden weder zu einem isolierten Knoten noch zu einer isolierten Gruppe Zellen gesendet.

Ein Netzknoten erzeugt noch eine Meldung zweiter Art, die keinen Defekt oder Fehler angibt, sondern eine vorgenommene oder vorzunehmende Schleifenaktion. Diese Meldung zweiter Art ist für die Netzknoten erforderlich, um zu wissen, ob sie noch bestimmte Netzknoten erreichen können und mit diesen Verbindungen aufbauen können. Diese Meldung, welche Angaben über den Netzknoten und über den Ring aufweist, der aufgrund der Schaltung der Schleife nicht weiter zur Weiterleitung von Zellen dient, wird allerdings nur dann erzeugt, wenn wenigstens ein anderer Netzknoten nicht über diese Information verfügt. Das ist beispielsweise dann der Fall, wenn eine isolierte Gruppe von Netzknoten vorliegt.

Patentanspruch 6 gibt an, wie die Meldung zweiter Art in einem Netzknoten verarbeitet wird. Diese Meldung zweiter Art dient nur zur Information und bewirkt keine Schleifenaktion.

Ein Netzknoten enthält eine Koppelvorrichtung, welche die Weiterleitung von empfangenen Zellen und somit auch eine Schleifenaktion durchführt. Eine Steueranordnung im Netzknoten steuert die Koppelvorrichtung und dient zur Änderung und Auswertung der Statustabelle.

Ausführungsbeispiele der Erfindung werden nachstehend anhand der Figuren näher erläutert. Es zeigen:

Fig. 1        ein lokales Netzwerk,
Fig. 2        eine in dem lokalen Netzwerk nach Fig. 1 verwendbare Netzwerkschnittstelle und
Fig. 3 bis 14        Ringsysteme eines lokalen Netzwerkes nach einem oder mehreren Leitungsbrüchen.

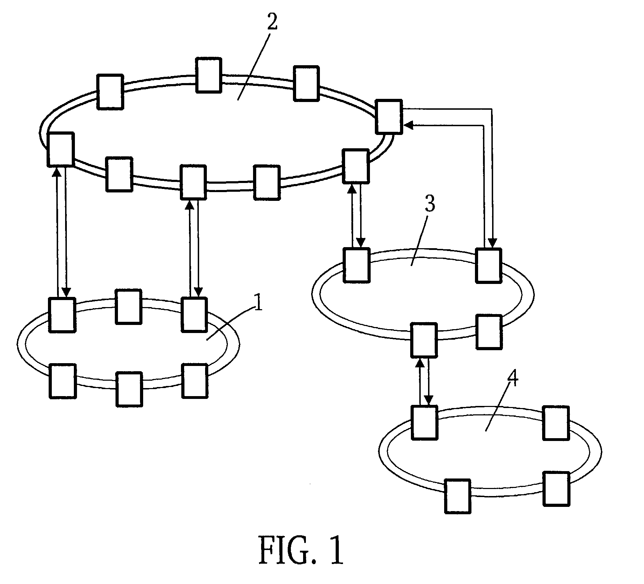

In Fig. 1 ist ein Ausführungsbeispiel eines lokalen Netzwerks mit vier Ringsystemen 1 bis 4 dargestellt, die jeweils zwei Ringe enthalten. Ein Ring stellt einen geschlossenen Signalweg über mehrere Netzknoten dar. Die Ringsysteme 1 bis 4 bilden jeweils zwei gegenläufige Ringe, d.h. die Signale laufen auf den Ringen jeweils in entgegengesetzter Richtung. Ein Netzknoten, der in den Ringsystemen 1 bis 4 jeweils als Rechteck dargestellt ist, umfaßt eine Netzwerkschnittstelle mit vier Ringanschlüssen und zwei Stationsanschlüssen.

An die Stationsanschlüsse ist entweder eine Station oder eine Netzwerkschnittstelle eines anderen Ringsystems angeschlossen. Beispielsweise sind in der Fig. 1 für das Ringsystem 2 insgesamt fünf Netzwerkschnittstellen mit Stationen und vier Netzwerkschnittstellen mit Netzwerkschnittstellen der Ringsysteme 1 und 3 verbunden. Eine Station kann beispielsweise ein Fernsprecher, ein Bildfernsprecher, ein Personal-Computer oder eine Workstation sein. Die Nachrichten bzw. Informationen, die von den Stationen bzw. den Netzwerkschnittstellen stammen, werden nach dem asynchronen Transfermodus mittels Zellen übertragen. Eine Zelle enthält ein Kopffeld mit 5 Byte und ein Informationsfeld mit 48 Byte. Die im Kopffeld der Zelle enthaltenen Informationen dienen insbesondere zur Adressierung und zur Durchführung von Vermittlungsfunktionen.

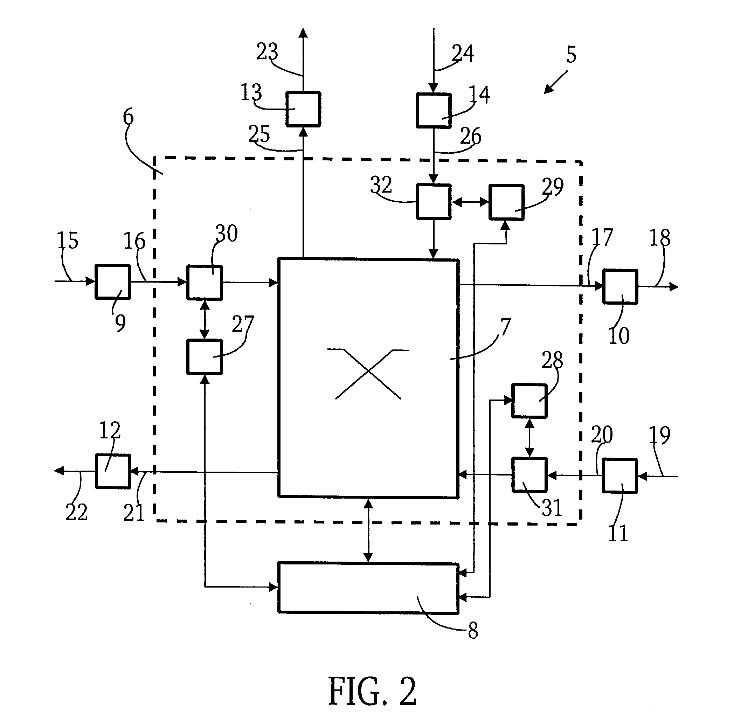

Eine Netzwerkschnittstelle 5 mit vier Ringanschlüssen ist in der Fig. 2 detaillierter dargestellt. Die Netzwerkschnittstelle 5 enthält eine Koppelvorrichtung 6 und eine Steueranordnung 8. Die Koppelvorrichtung 6, die ein Koppelfeld 7 enthält, ist über Anpassungsschaltungen 9 bis 14 mit Ring- und Stationsanschlüssen gekoppelt und hat die Funktion, den Zellenstrom weiter zu vermitteln. Die Anpassungsschaltungen 9 bis 14 können beispielsweise Umsetzeranordnungen enthalten, um die Zellen in übergeordnete Transportrahmen (z.B. in Transportrahmen der synchronen digitalen Hierachie (SDH)) einzufügen oder Pufferspeicher zur Taktanpassung, wenn die Zellen ohne Einfügung in einen übergeordneten Transportrahmen weitergeleitet werden.

Die Anpassungsschaltung 9 ist einerseits mit einem Empfangs-Ringanschluß 15 eines ersten Ringes und andererseits mit einem Anschluß 16, der zur Koppelvorrichtung 6 führt, gekoppelt. Die Anpassungsschaltung 10 ist über einen Anschluß 17 mit der Koppelvorrichtung 6 gekoppelt und liefert einen Zellenstrom an einen Sende-Ringanschluß 18 des ersten Ringes. Einen Zellenstrom von einem Empfangs-Ringanschluß 19 eines zweiten Ringes erhält die Anpassungsschaltung 11, die einen Zellenstrom über einen Anschluß 20 zur Koppelvorrichtung 6 liefert. Von einem Anschluß 21 der Koppelvorrichtung 6 empfängt die Anpassungsschaltung 12 Zellen, die an einen Sende-Ringanschluß 22 des zweiten Ringes weitergeleitet werden.

Ein Stationsanschluß 23 ist über die Anpassungsschaltung 13 und ein Stationsanschluß 24 ist über die Anpassungsschaltung 14 mit der Netzwerkschnittstelle 5 gekoppelt. Die Anpassungsschaltung 13, die einen Zellenstrom von der Koppelvorrichtung 6 erhält, ist über einen Anschluß 25 mit der Koppelvorrichtung 6 gekoppelt. Die Anpassungsschaltung 14, der ein Zellenstrom von einer Netzwerkschnittstelle eines anderen Ringsystems oder einer Station geliefert wird, ist über den Stationsanschluß 24 mit einer Station oder einer Netzwerkschnittstelle eines anderen Ringsystems und über einen Anschluß 26 mit der Koppelvorrichtung 6 gekoppelt. Falls keine Umsetzung der Zellen oder eine Taktanpassung erforderlich ist, sind die Anpassungsschaltungen 9 bis 14 nicht erforderlich.

Die Steueranordnung 8 ist zur Steuerung der Koppelvorrichtung 6 und für weitere Steuerungsfunktionen (z.B.

Verbindungsaufbau und -abbau) vorgesehen. Die Steueranordnung 8, die als Mikroprozessor realisiert sein kann, erhält und erzeugt für diese Aufgaben auch Zellen.

Außer dem Koppelfeld 7 enthält die Koppelvorrichtung 6 drei Wegespeicheranordnungen 27, 28 und 29 und drei Empfangsschaltungen 32, 33 und 34. In den Empfangsschaltungen 30, 31 und 32 werden jeweils die Kopffelder von über Anschlüssen 16, 20 und 26 ankommenden Zellen ausgewertet.

Im Kopffeld enthaltene Adresseninformationen werden zur Ansteuerung verschiedener Tabellen für die mit den Empfangsschaltungen 30, 31 und 32 verbundenen Wegespeicheranordnungen 27, 28 und 29 verwendet. Die in den Tabellen abgelegten Daten werden jeweils von den Empfangsschaltungen 30, 31 und 32 verwendet, um die weitere Verarbeitung und Weiterleitung der Zelle zu organisieren. Beispielsweise kann die Empfangsschaltung 30 die Zelle kopieren und mit neuen Adresseninformationen versehen. Die Originalzelle wird z.B. über das Koppelfeld 7 an den Stationsanschluß 23 und die kopierte Zelle über das Koppelfeld 7 an die Anpassungsschaltung 10 gegeben. Es besteht noch die Möglichkeit, daß das Koppelfeld 7 diese Kopierfunktion durchführt.

Die Empfangsschaltung 30 ist über den Anschluß 16 mit dem Pufferspeicher 9 gekoppelt und leitet empfangene Zellen zum Koppelfeld 7 weiter. Die Wegespeicheranordnung 27 ist mit der Empfangschaltung 30 verbunden. Die Empfangsschaltung 31 ist mit der Wegespeicheranordnung 28 verbunden, erhält Zellen von dem Pufferspeicher 11 und gibt Zellen an das Koppelfeld 7 weiter. Zwischen dem Koppelfeld 7 und dem Anschluß 26 ist die Empfangsschaltung 32 angeordnet, die mit der Wegespeicheranordnung 29 verbunden ist.

Über die Ringanschlüsse 15 und 18 des ersten Ringes und über die Ringanschlüsse 19 und 22 werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld Steuerungsinformationen enthalten.

Im folgenden werden die Ringanschlüsse 15 und 19 auch als dem Netzknoten zugeordnete Empfangsleitungen und die Ringanschlüsse 18 und 22 als dem Netzknoten zugeordnete Sendeleitungen bezeichnet.

Bestimmte Bits im Kopffeld einer Zelle sind für den VCI (virtual channel identifier) reserviert. Diese Angabe enthält nach Normungsvorschlägen eine indirekte Adressierung für den Bestimmungsort einer Zelle und gibt damit eine virtuelle Verbindung an. Des weiteren sind bestimmte Bits im Kopffeld der Zelle für den VPI (virtual path identifier) reserviert, der ein Bündel mehrerer virtueller Verbindungen angibt.

Bestimmte Bits des VCI und des VPI werden bei diesem Ausführungsbeispiel für andere Informationen als bei den Normungsvorschlägen vorgesehen. Der VPI enthält Informationen über die Adresse (Adresseninformationen) bzw. den Bestimmungsort (Netzknoten) einer Zelle in einem Ringsystem. Der VCI wird für die Angabe über die anwenderbezogene Kennung für eine Verbindung, die Art der Verbindung und die Zellenart verwendet. Außerdem wird der VCI als Adresse für ein Ringsystem benutzt.

Die Steueranordnung 8 der Netzwerkschnittstelle 5 steuert den Verbindungsaufbau einer zugeordneten Station mit anderen Stationen. Die entsprechenden Steuerungsvorgänge für den Aufbau und Abbau von Verbindungen kann beispielsweise der europäischen Patentanmeldung EP-0 641 105 A2 entnommen werden.

Die Wegespeicheranordnungen 27 bis 29 der Koppelvorrichtung 6 enthalten Informationen die von den zugeordneten Empfangsschaltungen 30 bis 32 ausgewertet werden, um die weitere Verarbeitung und Weiterleitung der empfangenen Zelle zu organisieren. Beispielsweise kann eine Zelle mit einer anderen Adresse versehen werden, kopiert oder gelöscht werden. Die Wegespeicheranordnungen 27 bis 29 können von der Steueranordnung 8 beispielsweise im Fehlerfall (z.B. Kabelbruch bzw. Leitungsbruch) verändert werden.

Bei einer Verbindung zwischen einem Netzknoten eines ersten Ringsystems und einem Netzknoten eines zweiten Ringsystems müssen bei einem Übertritt einer Zelle von einem Ringsystem in ein anderes Veränderungen des VPI und des VCI durchgeführt werden. Hierzu sind vor dem Verbindungsaufbau entsprechende Einträge in den Wegespeicheranordnungen vorgenommen worden.

Wenn ein Fehler im lokalen Netzwerk auftritt, werden von dem einen Fehler detektierenden Netzknoten verschiedene Maßnahmen durchgeführt. Beispielsweise kann ein Ringanschluß oder ein Stationsanschluß unterbrochen werden oder ein Netzknoten ausfallen (Knotenausfall). Von der Steueranordnung 8 einer Netzwerkschnittstelle bzw. eines Netzknotens wird ein solcher Fehler z.B. nach Aussenden von Kontrollzellen eines benachbarten Knotens, die nicht empfangen werden, oder durch einen Synchronisationsverlust detektiert. Im folgenden wird beschrieben, wie wenigstens ein Leitungsbruch oder ein Knotenausfall in einem Ringsystem eines lokalen Netzwerks verarbeitet wird. Ein Netzknoten kann einen Knotenausfall nicht detektieren, sondern stellt fest, daß von der Leitung eines ausgefallenen benachbarten Knoten keine Zellen mehr ankommen. Somit ist ein Knotenausfall, wie im folgenden auch vorausgesetzt wird als ein zweifacher Leitungsbruch zu interpretieren.

Ein Netzknoten führt verschiedene Aktionen nach der Entstehung eines Leitungsbruchs aus. Die Steueranordnung 8 eines Netzknoten, die einen Leitungsbruch auf der zugehörigen Empfangsleitung des inneren oder äußeren Rings detektiert, veranlaßt die Sendung einer Zelle mit einer Meldung über einen Fehler, die eine Meldung erster Art darstellt, über beide Ringe. Die Zelle mit der Meldung erster Art, die eine Information über den Ort des Fehlers enthält, wird als zu einer Broadcast- oder Verteilverbindung zugehörig betrachtet und wird somit zu allen anderen Netzknoten des Ringsystems gesendet. Eine Meldung erster Art (Meldung über einen Fehler) gibt den Netzknoten an, dessen Sendeleitung einen Leitungsbruch aufweist, und den Ring, auf welchem der Fehler aufgetreten ist.

Es wird noch eine Meldung zweiter Art in einer Zelle von einem Netzknoten über das Netzwerk in Zusammenhang mit einem Fehler gesendet. Das ist eine Meldung über eine vorgenommene Schleifenaktion in einem Netzknoten. Hierbei ist zu beachten, daß die zugehörige Sendeleitung nicht defekt ist. Die Schaltung einer Schleife bedeutet, daß in der Koppelvorrichtung 6 eines Netzknotens umgeroutet wird, d.h. ankommende Zellen werden entweder von dem inneren zum äußeren oder vom äußeren zum inneren Ring weitergeleitet. Hierzu werden die Tabelleneinträge in den zugeordneten Wegespeicheranordnungen 27 bis 29 der Koppelvorrichtung 6 geändert. In der Koppelvorrichtung 6 wird dann aufgrund der Tabelleneinträge in den Wegespeicheranordnungen 27 bis 29 eine Zelle nicht mehr auf dem gleichen Ring sondern auf den anderen Ring geleitet.

Die Steueranordnung 8 eines Netzknotens enthält eine Statustabelle, in der Einträge über Leitungsbrüche und Schleifenaktionen jedes Netzknotens des Ringsystems enthalten sind. Die Statustabelle gibt den Netzknoten an, dessen zugehörige Sendeleitung einen Fehler aufweist und/oder der eine Schleifenaktion durchgeführt hat, und den Ring auf den von dem betreffenden Netzknoten aufgrund des Leitungsbruches oder der geschalteten Schleife keine Zellen mehr gesendet werden können. Die Statustabelle weist also einen Eintrag für einen Netzknoten auf, dessen Sendeleitung einen Fehler aufweist und der eine Schleife geschaltet hat oder der nur eine Schleifenaktion durchgeführt hat. Ein solcher Eintrag wird im folgenden als Muster oder Pattern bezeichnet. Das Muster wird in der Form, in der es in einer Tabelle eingetragen ist, auch in einer Meldung erster oder zweiter Art übertragen.

Wenn ein Netzknoten eine Meldung erhält wird das empfangene Muster in der zugeordneten Statustabelle eingetragen. Diese Eintragung wird von der zugehörigen Steueranordnung 8 durchgeführt. Aus Vereinfachungsgründen wird im folgenden eine Funktion der Steueranordnung 8 nicht explizit angegeben, sondern als Funktion des betreffenden Netzknotens erläutert. Nach Empfang der Meldung erfolgt die Auswertung der Statustabelle, durch die eine Schleifenaktion ausgelöst werden kann. Ist eine Schleifenaktion von einem Netzknoten durchgeführt worden, kann eine Meldung zweiter Art über die Schleifenaktion über beide Ringe von dem Netzknoten an alle anderen Netzknoten gesendet werden, wie später erläutert wird.

Wird von einem Netzknoten ein Fehler detektiert, ändert dieser seine Statustabelle. In die Statustabelle wird eingetragen, welcher Netzknoten von dem Leitungsbruch betroffen ist und auf welchem Ring der Fehler aufgetreten ist. Anschließend wird der Eintrag als Muster in einer Meldung erster Art über einen Fehler an alle anderen Netzknoten gesendet.

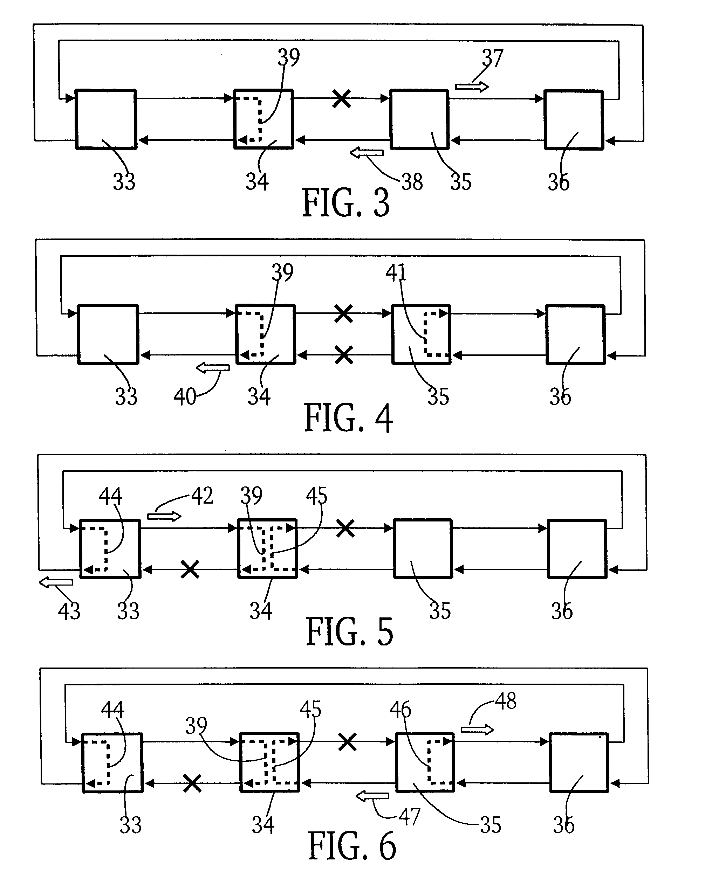

Anhand der Fig. 3 lassen sich die Vorgänge bei einem einzelnen oder Simplex-Leitungsbruch näher erläutern. Das in Fig. 3 dargestellte Ringsystem enthält einen inneren und einen äußeren Ring und vier Netzknoten 33 bis 36. Die innere Ringverbindung zwischen Netzknoten 34 und 35 sei defekt. Einen solchen Fehler detektiert der Netzknoten 35, führt daraufhin Änderungen in einer Statustabelle durch und sendet eine Meldung P1 über einen Fehler (Meldung erster Art) über den inneren und äußeren Ring zu den anderen Netzknoten. Die Sendung der Meldung P1 vom Netzknoten 35 auf den inneren Ring in Richtung des Netzknotens 36 ist durch einen Pfeil 37 und die Sendung der Meldung P1 vom Netzknoten 35 auf den äußeren Ring in Richtung des Netzknotens 34 durch einen Pfeil 38 angedeutet. Der Netzknoten 34, der die Meldung P1 zweimal erhält, reagiert nach Eintreffen der ersten Meldung P1 dadurch, daß er Einträge in seiner Statustabelle vornimmt, diese auswertet und infolge der Auswertung eine Schleife 39 vom inneren zum äußeren Ring schaltet. Infolge der Behandlung der zuerst über den inneren bzw. äußeren Ring eintreffenden Meldung P1 wird die danach über den äußeren bzw. inneren Ring eintreffende Meldung P1 nicht beachtet. Einträge über den Fehler werden nach Eintreffen der Meldung P1 auch in den Statustabellen der anderen Netzknoten 33 und 36 durchgeführt, die ebenfalls ihre jeweiligen Statustabellen auswerten. Die Auswertung in den Netzknoten 33 und 36 bewirkt jedoch keine Aktion. Zellen auf dem inneren Ring werden dann also im Netzknoten 34 auf den äußeren Ring geführt und gelangen dann anstatt über den inneren Ring über den äußeren Ring zum Zielknoten. Hiermit sind in den jeweiligen Netzknoten 33 bis 36 alle Aktionen nach einem Simplex-Leitungsbruch beendet. Unter einem Simplex-Leitungsbruch soll im folgenden ein Leitungsbruch entweder auf dem inneren oder äußeren Ring zwischen zwei benachbarten Netzknoten verstanden werden.

In Fig. 4 wird ein Duplex-Leitungs- bzw. Kabelbruch gezeigt. Darunter wird verstanden, daß zwischen zwei benachbarten Netzknoten die Leitungen des inneren und äußeren Rings defekt sind. Tritt ein zweiter Fehler nach Auftreten eines Simplex-Kabelbruchs, wie in Fig. 1 beschrieben, dann im äußeren Ring zwischen den Netzknoten 34 und 35 auf (Fig. 4), wird dieser Defekt von dem Netzknoten 34 detektiert, der daraufhin weitere Änderungen in seiner Statustabelle durchführt und eine Meldung P2 über einen Fehler (Meldung erster Art) über den äußeren Ring (Pfeil 40) zu den anderen Netzknoten 33, 35 und 36 sendet. Nach Empfang der Meldung P2 ändern die Netzknoten 33, 35 und 36 ihre Statustabellen und werten diese aus. Aufgrund der Auswertung schaltet der Netzknoten 35 zusätzlich eine Schleife 41 vom äußeren auf den inneren Ring. Falls ein Defekt gleichzeitig auf dem inneren und äußeren Ring zwischen den Netzknoten 34 und 35 auftritt, senden die einen Fehler detektierenden Netzknoten gleichzeitig die Meldungen über beide Ringe aus, die dann auf analoge Weise hintereinander in jedem Netzknoten behandelt werden.

Im folgenden sei vorausgesetzt, daß ein Defekt des inneren Rings zwischen den Knoten 34 und 35, wie in Fig. 3 gezeigt, aufgetreten ist. Ein weiterer Leitungsbruch sei im äußeren Ring zwischen den Netzknoten 33 und 34 aufgetreten (Fig. 5). Diesen zweiten Defekt detektiert der Netzknoten 33. Dieser Netzknoten 33 führt entsprechende Veränderungen seiner Statustabelle durch und sendet über den inneren und äußeren Ring Meldungen P3 (Meldung erster Art) über einen Fehler (Pfeile 42 und 43) an die anderen Netzknoten. Nach der Erneuerung der Statustabelleneinträge wertet der Netzknoten 33 die Statustabelle aus und stellt fest, daß schon ein Defekt auf dem inneren Ring zwischen den Netzknoten 34 und 35 vorhanden ist und daher der Netzknoten 34 aufgrund des zweiten Defekts isoliert ist. Eine Isolierung eines Knotens bedeutet, daß dieser zwar Zellen empfangen, aber keine Zellen senden kann. Zellen, die bestimmten Verbindungen zwischen z.B. zwei Teilnehmern zugeordnet sind und die nicht zur zugeordneten Station des isolierten Knotens gehören, können den isolierten Knoten nicht passieren bzw. durchlaufen. Ein isolierter Knoten erscheint aus der Sicht seiner benachbarten Netzknoten wie ein Knoten, der ausgefallen ist. Wie oben schon erwähnt, sendet ein ausgefallener Knoten über seine Sendeleitungen keine Zellen mehr, was durch Feststellung eines Synchronisationsverlustes oder mit Hilfe von Kontrollzellen festgestellt werden kann. Ein dem isolierten Knoten benachbarter Knoten stellt aber immer einen Leitungsbruch fest. Daher schaltet der Netzknoten 33 eine Schleife 44 vom inneren zum äußeren Ring, führt entsprechende Statustabelleneinträge durch und sendet über beide Ringe Meldungen P4 (Meldungen zweiter Art) über eine Schleifenaktion aus (wiederum durch die Pfeile 42 und 43 angedeutet).

Nachdem der Netzknoten 34 die Meldung P3 vom Netzknoten 33 empfangen hat, werden entsprechende Statustabelleneinträge durchgeführt. Der Netzknoten 34 ermittelt dann nach Überprüfen der Tabellen, daß er isoliert ist und setzt eine Schleife 45 vom äußeren zum inneren Ring (Fig. 5). Diese Schleife ist dann erforderlich, wenn später der Defekt behoben wird und das Ringsystem schrittweise in den normalen Zustand übergeht. Nach Empfang der Meldung P4 wird deren Inhalt dann noch in der Statustabelle des Netzknotens 34 abgelegt. Hierbei ist zu beachten, daß der Knoten 33 noch den Knoten 34 erreichen kann.

Der Netzknoten 35 ändert ebenfalls seine Statustabelleneinträge nach Empfang der Meldung P3 und stellt fest, daß der Knoten 34 isoliert ist. Er setzt eine Schleife 46 vom äußeren zum inneren Ring, trägt dies in seine Statustabelle ein und sendet eine Meldung P5 (Meldung zweiter Art) über eine Schleifenaktion (Pfeile 47 und 48) an alle anderen Netzknoten. Die Netzknoten 33, 34 und 36 empfangen diese Meldung P5, tragen sie in ihre jeweilige Statustabelle ein und werten sie aus. Die Auswertung ergibt, daß keine weitere Aktion durchgeführt werden muß.

In dem oben beschriebenen Ausführungsbeispiel detektiert der Netzknoten 33 den zweiten Leitungsbruch auf dem äußeren Ring zwischen den Netzknoten 33 und 34, nachdem dieser die Meldung P1 vom Netzknoten 35 über den ersten Leitungsbruch zwischen den Netzknoten 34 und 35 empfangen hat. Wenn aber der Netzknoten 33 zuerst den zweiten Leitungsbruch vor Empfang der Meldung P1 detektiert, wird ein Statustabelleneintrag wie oben beschrieben durchgeführt und auch eine Meldung P3 ausgegeben. Nach Empfang der Meldung P1 wird deren Inhalt der entsprechenden Statustabelle im Netzknoten 33 hinzugefügt.

Auch wenn die Netzknoten 33 und 35 jeweils gleichzeitig eine Meldung erhalten, stellt dies kein Problem dar. Beide Netzknoten stellen nach Auswertung der empfangenen Meldungen fest, daß der Netzknoten 34 isoliert ist und senden dann die Meldung P3, P4 bzw. P5 aus.

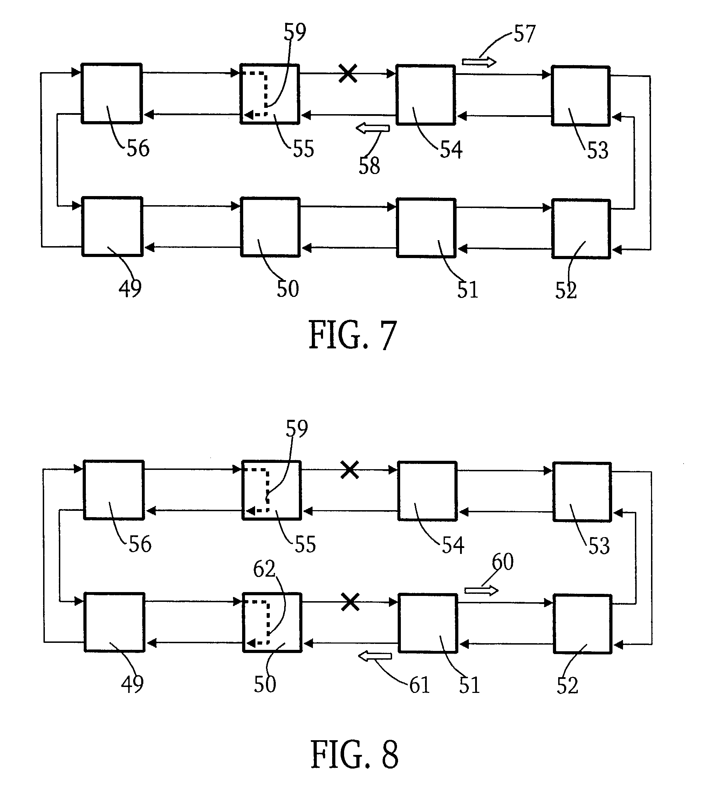

Wenn ein Leitungsbruch auf einem inneren und einem äußeren Ring vorhanden ist und mehrere Netzknoten zwischen den defekten Leitungen enthalten sind, entstehen nach einer Detektion und Rekonfigurierung des Ringsystems zwei Sub-Ringsysteme mit einer isolierten Gruppe von Netzknoten, wie im folgenden anhand der Fig. 7 bis 10 gezeigt wird. Eine isolierte Gruppe von Netzknoten kann keine Zellen mehr zu einem anderen Subsystem senden. Die Fig. 7 bis 10 zeigen ein Ringsystem mit acht Netzknoten 49 bis 56. Es sei, wie in Fig. 7 gezeigt, vorausgesetzt, daß ein Leitungsbruch auf dem äußeren Ring zwischen den Netzknoten 54 und 55 entstanden ist. Der Netzknoten 54, der vom Netzknoten 55 über den äußeren Ring Zellen empfangen sollte, detektiert den Defekt, führt entsprechende Einträge in seiner Statustabelle durch und informiert die anderen Netzknoten 49 bis 53, 55 und 56 mittels einer Meldung P6 (Meldung erster Art) über einen Fehler (Pfeile 57 und 58), die über den äußeren und inneren Ring gegeben wird. Der Netzknoten 55 ändert nach Empfang der Meldung P6 seine Statustabelleneinträge, wertet die Statustabelle aus und legt eine Schleife 59 von dem äußeren zum inneren Ring. Die anderen Netzknoten 49 bis 53 und 56 aktualisieren nach Empfang der Meldung P6 ebenfalls ihre Statustabellen. Eine nachfolgende Auswertung der jeweiligen Statustabellen in den Netzknoten 49 bis 53 und 56 ergibt allerdings, daß keine weitere Aktion erfolgen muß.

Ferner sei vorausgesetzt, daß ein Leitungsbruch am inneren Ring zwischen den Netzknoten 50 und 51 auftritt, wie dies Fig. 8 zeigt. Der Netzknoten 51 detektiert den Fehler, ändert die Statustabelleneinträge und informiert mit Hilfe einer Meldung P7 (Meldung erster Art) über einen Fehler (Pfeile 60 und 61), die über beide Ringe gesendet wird, die anderen Netzknoten 49, 50 und 52 bis 56. Der Netzknoten 50 aktualisiert nach Empfang der Meldung P7 ebenso wie alle anderen Netzknoten 49 und 52 bis 56 seine Statustabelle, wertet diese aus und schaltet infolge der Auswertung eine Schleife 62 vom inneren zum äußeren Ring.

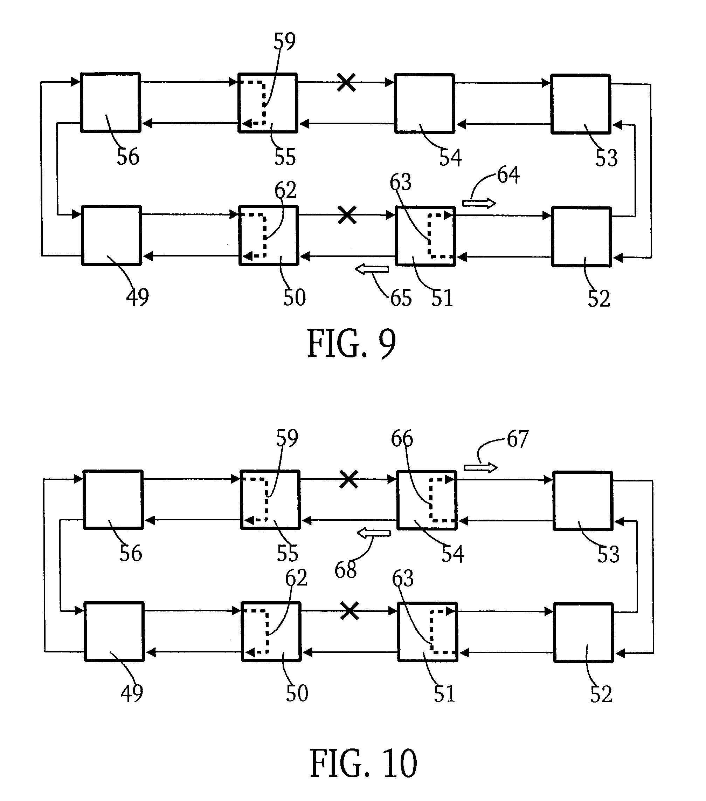

Anhand seiner Statustabelleneinträge ermittelt der Knoten 51, daß die Knoten 51 bis 54 keine Zellen mehr von den Knoten 49, 50, 55 und 56 aufgrund des zweiten Leitungsbruches empfangen können, eine isolierte Gruppe von Knoten darstellen und somit Sub-Ringsysteme gebildet werden müssen. Daraufhin schaltet der Netzknoten 51, wie das Fig. 9 zeigt, eine Schleife 63 vom äußeren zum inneren Ring und informiert mittels einer Meldung P8 (Meldung zweiter Art) über eine Schleifenaktion (Pfeile 64 und 65) alle anderen Netzknoten 49 bis 51 und 53 bis 56.

Der Netzknoten 54 erhält zuerst die Meldung P7 und anschließend die Meldung P8. Nach Empfang der Meldung P7 stellt der Netzknoten 54 fest, daß ein Sub-Ringsystem gebildet werden muß. Der Netzknoten 54 schaltet ebenfalls eine Schleife 66 vom inneren zum äußeren Ring und sendet Meldungen P9 (Meldungen zweiter Art) über eine Schleifenaktion (Pfeile 67 und 68) zu allen anderen Netzknoten 49 bis 53, 55 und 56. In allen Netzknoten 49 bis 56 wird dann die jeweilige Statustabelle angepaßt und ausgewertet. Es erfolgt keine weitere Aktion in den Netzknoten 49 bis 56.

In allen Netzknoten 49 bis 56 weisen danach die jeweiligen Statustabellen die gleichen Einträge auf. Der gleiche Status in allen Statustabellen ist auf jeden Fall bei ein oder zwei Leitungsbrüchen, die auf verschiedenen Ringen aufgetreten sind und wie oben beschrieben ist, vorhanden. Falls mehrere Leitungsbrüche ausschließlich auf einem Ring entstanden sind, ist der Status in den jeweiligen Statustabellen der Netzknoten gleich. Bei mehr als zwei Leitungsbrüchen auf verschiedenen Ringen kann der gleiche Status in allen Statustabellen möglicherweise nicht erreicht werden.

Bei der Initalisierung eines lokalen Netzwerkes (nach der Inbetriebnahme oder einem Neustart) sendet beispielsweise jeder Netzknoten seine individuell vorgegebene Adresse in einer Nachricht in einem Zellenstrom über den inneren oder äußeren Ring. Jeder Netzknoten des Rings fügt in einer vorgegebenen Reihenfolge in die Nachricht seine jeweilige Adresse ein. Nach Empfang der Nachricht des Netzknotens, der die Nachricht ursprünglich ausgesendet hat, wertet dieser den Inhalt der Nachricht aus und kennt damit die Reihenfolge der Adressen aller Netzknoten des Ringsystems auf dem inneren bzw. äußeren Ring. Jeder Netzknoten ermittelt den Netzknoten mit der kleinsten Adresse und weist diesem Netzknoten die zyklische Knotennummer 0 (CNN 0) zu. Anschließend werden in Zellstromrichtung den anderen Netzknoten beispielsweise entlang des inneren Rings aufsteigend die zyklischen Knotennummern 1, 2, 3, ..., R-1 zugewiesen, wobei $R \in \mathbb{N}$ die Anzahl der Netzknoten im Ringsystem ist. Beispielsweise weisen die dem Netzknoten mit der CNN 3 benachbarten Netzknoten die CCN 2 und die CNN 4 oder, wenn das Ringsystem nur aus vier Netzknoten besteht, die CNN 0 auf.

Die Statustabelle innerhalb eines Netzknotens, die beispielsweise Bestandteil der Steueranordnung 8 ist, hat für jeden Netzknoten des Ringsysstems Einträge. Die Tabelle ist dabei nach den zyklischen Knotennummern geordnet. Beispielsweise weist die Tabelle außer einer Spalte mit den CNN, eine Spalte auf, in der angezeigt ist, ob die Sendeleitung des inneren Rings, die mit dem jeweiligen Netzknoten verbunden ist, gebrochen ist. Eine weitere Spalte existiert noch für die Anzeige eines Leitungsbruches auf dem äußeren Ring. So bedeutet der Eintrag 3, 0, 1, daß ein Bruch in der Sendeleitung des äußeren Rings des Netzknotens mit der CNN 3 vorliegt und daß eine Schleife im Netzknoten mit der CNN 3 geschaltet ist, so daß der innere Ring nicht mehr erreichbar ist. Der Eintrag 3, 0, 1 kann - wie vorher schon erwähnt - auch bedeuten, daß nur eine Schleife geschaltet ist, ohne daß eine Leitung gebrochen ist. Das kann der Fall sein, wenn ein isolierter Netzknoten oder eine isolierte Gruppe von Netzknoten entstanden ist und entsprechend behandelt wird.

Wie anhand der Fig. 3 bis 10 beschrieben ist, wird bei einem detektierten Leitungsbruch oder einer durchgeführten Schleifenaktion eine Meldung im Regelfall über den inneren und äußeren Ring gesendet. Hierfür wird eine Anwenderzelle verwendet, die in ihrem Informationsfeld die oben beschriebenen Angaben enthält. Eine Meldung beispielsweise erster Art in einer Anwenderzelle enthält ein Muster mit einer CNN und dem Fehlerort (innerer oder äußerer Ring). Wenn der Fehler auf dem inneren Ring aufgetreten ist, fügt der detektierende Netzknoten i (z.B. Netzknoten 37 in Fig. 3), i = 0, ..., R-1, unter der Voraussetzung, daß die zyklische Knotennummer CNN in Zellstromrichtung des inneren Rings vergeben ist, die Information $[\text{mod}_R(i-1), 1, 0]$ in eine Anwenderzelle ein, wobei $\text{mod}_R(k)$ den Rest nach einer Division von k durch R angibt. Wenn der detektierende Netzknoten i einen Fehler auf dem äußeren Ring feststellt, wird die Information $[\text{mod}_R(1+1), 0, 1]$ unter der Voraussetzung, daß die zyklische Knotennummer CNN in Zellstromrichtung des inneren Rings vergeben ist, in eine Anwenderzelle eingefügt. Die Anwenderzellen werden an alle anderen Netzknoten des Ringsystems weitergeleitet. Die Netzknoten, welche die Zelle mit der Information empfangen, tragen die empfangene Information in ihre jeweilige Statustabelle ein. Ein Netzknoten erkennt dann an den Einträgen in der Statustabelle, welche Aktion in einem anderen Netzknoten durchgeführt worden ist. So bedeutet beispielsweise der Eintrag $[\text{mod}_R(i), 1, 0]$, daß der Netzknoten eine Schleife eine Schleife vom inneren zum äußeren Ring geschaltet hat oder unmittelbar schalten wird. Im Falle eines Simplex- oder Duplex-Leitungsbruchs ist die Schaltung der Schleife infolge eines Leitungsbruchs erfolgt. Im Falle einer isolierten Gruppe von Netzknoten oder eines isolierten Knotens kann ein solcher Eintrag auch das Schalten einer Schleife ohne entsprechenden Leitungsbruch bedeuten.

Nach einer Änderung in der Statustabelle werden Statusveränderungen und gegebenenfalls Änderungen in den Wegespeicheranordnungen 27 bis 29, z.B. zum Schalten einer Schleife, durchgeführt. Ist ein einziger Leitungsbruch aufgetreten, wird in jedem Netzknoten mit einer CNN K, $K \in \{0, 1, 2\ R-1\}$, wobei R die Anzahl der Netzknoten eines Ringsystems angibt, die Statustabelle geprüft. In dem Netzknoten mit der CNN i, dessen Sendeleitung des inneren oder äußeren Rings einen Bruch aufweist, schaltet eine Schleife, indem die Tabellen der entsprechenden Wegespeicheranordnungen 27 bis 29 in dem Netzknoten mit der CNN i geändert werden. In den anderen Netzknoten mit der CNN 0, 1, 2 i-1, i+1, ..., R-1 wird keine weitere Aktion durchgeführt.

Im folgenden wird eine Methode vorgestellt, die es erlaubt, bei zwei oder mehr Leitungsbrüchen alle erforderlichen Aktionen zu starten. Hierzu werden zuerst zwei Mengen U und D definiert. Die Menge U gibt die CNN aller Knoten an, bei welchen auf ihrer jeweiligen Sendeleitung des inneren Rings ein Leitungsbruch aufgetreten ist, und die Menge D gibt die CNN aller Knoten an, bei welchen auf ihrer jeweiligen Sendeleitung des äußeren Rings ein Leitungsbruch aufgetreten ist. In dem Fall, daß ein Leitungsbruch auf der Sendeleitung des inneren Rings des Netzknotens mit der CNN 2 aufgetreten ist, beträgt U = {2} und D = $\emptyset$ (leere Menge).

Es sei vorausgesetzt, daß zwei Leitungsbrüche aufgetreten sind. Wenn U = $\emptyset$ ist, ist jeweils ein Defekt auf Sendeleitungen des äußeren Rings zweier Netzknoten mit den CNN i und j (i ≠ j), i, j $\in$ 0, ..., R-1, aufgetreten. Der Netzknoten i, bei dem zuerst ein Leitungsbruch aufgetreten ist und der schon eine Schleife geschaltet hat, hat zuvor eine Marke "LoopbackOldone" gesetzt und führt daher keine weitere Aktion aus, wenn er nach Eintragung des Musters über den zweiten Leitungsbruch seine Statustabelle auswertet. Der Netzknoten j findet keine gesetzte Marke, bildet eine Schleife vom äußeren zum inneren Ring und setzt eine Marke "LoopbackOldone".

Wenn ein zweiter Leitungsbruch aufgetreten ist und D = $\emptyset$ ist, ist jeweils ein Defekt auf Sendeleitungen des inneren Rings zweier Netzknoten mit den CNN i und j (i ≠ j) aufgetreten. Der Netzknoten i, bei dem zuerst ein Leitungsbruch aufgetreten ist und der schon eine Schleife geschaltet hat, hat zuvor eine Marke "LoopbackIOdone" gesetzt und führt nach Auswertung der Statustabelle, die zusätzlich den Eintrag über das Muster des zweiten Leitungsbruchs enthält, keine weitere Aktion aus. Der Netzknoten j findet keine gesetzte Marke, bildet eine Schleife vom inneren zum äußeren Ring und setzt eine Marke "LoopbackIOdone".

Ist jeweils ein Leitungsbruch auf dem inneren und äußeren Ring entstanden, sind die beiden Mengen U und D nicht leer, d.h. U = {u} und D = {d}. Jeder Netzknoten mit einer CNN K, K $\in$ {0, 1, 2, ..., R-1}, wertet nach dem zweiten Leitungsbruch die Statustabelle aus. Dabei können die drei folgenden Fälle A, B und C auftreten:

A) Im ersten Fall sei u = d, d.h. ein Netzknoten mit einer CNN u = d ist isoliert, wie das in den Fig. 5 bis 6 dargestellt ist. Die beiden (innerer und äußerer Ring) Sendeleitungen dieses Knotens weisen einen Leitungsbruch auf. Jeder Netzknoten K wertet nach dem zweiten Leitungsbruch seine Statustabellen aus:

A1) Wenn K = u = d ist, ist der Netzknoten mit der CNN K der isolierte Netzknoten, in dem eine Marke "CurrentNodeIsolated" gesetzt wird.
A2) Wenn K = $mod_R(u+1)$ ist, ist der Netzknoten mit der CNN K der benachbarte Netzknoten in Zellstromrichtung auf dem inneren Ring, in dem eine Marke "NeighbourIsolatedNodeOI" gesetzt wird. Dieser Netzknoten mit der CNN K schaltet eine Schleife nach der unten beschriebenen Auswertung von gesetzten Marken vom äußeren auf den inneren Ring (vgl. Fig 6).
A3) Wenn K = $mod_R(d-1)$ ist, ist der Netzknoten mit der CNN K der benachbarte Netzknoten in Zellstromrichtung auf dem äußeren Ring, in dem eine Marke "NeighbourIsolatedNodeIO" gesetzt wird. Dieser Netzknoten mit der CNN K schaltet eine Schleife nach der unten beschriebenen Auswertung von gesetzten Marken vom inneren auf den äußeren Ring (vgl. Fig 5).

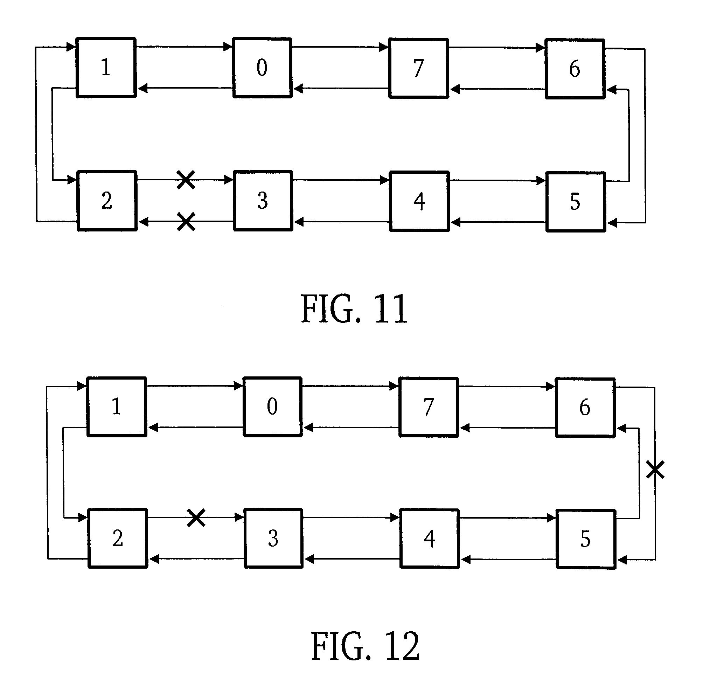

B) Im zweiten Fall sei $mod_R(u+1)$ = d, d.h. es liegt ein Duplex-Leitungsbruch vor. Ein Beispiel für einen solchen Duplex-Leitungsbruch ist in Fig. 11 dargestellt, in der acht Netzknoten mit den CNN 0 bis 7 dargestellt sind. Ein Leitungsbruch ist auf dem inneren und äußeren Ring zwischen den Netzknoten mit den CNN 2 und 3 entstanden. Es ist also u = 2 und d = 3. Die Sendeleitung des inneren Rings und die Empfangsleitung des äußeren Rings des Netzknotens mit der CNN u bzw. die Sendeleitung des äußeren Rings und die Empfangsleitung des inneren Rings des Netzknotens mit der CNN d weisen einen Leitungsbruch auf. Jeder Netzknoten K wertet nach dem zweiten Leitungsbruch seine Statustabellen aus.

B1) Wenn K = d ist, setzt der Netzknoten mit der CNN K eine Marke "DuplexLineBreakOI". Dieser Netzknoten schaltet eine Schleife nach der unten beschriebenen Auswertung von gesetzten Marken vom äußeren auf den inneren Ring, wenn diese nicht schon aufgrund einer vorhergehenden Meldung erster Art geschaltet wurde.
B2) Wenn K = u ist, setzt der Netzknoten mit der CNN K eine Marke "DuplexLineBreakIO". Dieser Netzknoten schaltet eine Schleife nach der unten beschriebenen Auswertung von gesetzten Marken vom inneren auf den äußeren Ring, wenn diese nicht schon aufgrund einer vorhergehenden Meldung erster Art geschaltet wurde.

C) Im dritten Fall liegt eine isolierte Gruppe von Netzknoten vor, wodurch zwei Subsysteme entstehen, wie das die Fig. 7 bis 10 zeigen. In Fig. 12 ist ein weiteres Beispiel mit acht Netzknoten mit den CNN 0 bis 7 dargestellt. Es liegt ein Leitungsbruch auf dem äußeren Ring zwischen den Netzknoten mit den CNN 5 und 6 und auf dem inneren Ring zwischen den Netzknoten 2 und 3 vor. Eine isolierte Gruppe von Netzknoten enthält zwei Endknoten. Ein erster Endknoten, der im folgenden als äußerer Endknoten bezeichnet wird, ist der Netzknoten, welcher einen Leitungsbruch in der Sendeleitung des äußeren Rings enthält. Ein zweiter Endknoten, der im folgenden als innerer Endknoten bezeichnet wird, ist der Netzknoten, welcher einen Leitungsbruch in der Sendeleitung des inneren Rings aufweist. In der Fig. 12 wird die isolierte Gruppe durch die Netzknoten 6, 7, 0, 1 und 2 gebildet. Das zweite entstehende Subsystem enthält die Netzknoten 3, 4 und 5.

C1) Wenn der Netzknoten mit der CNN K die Bedingung

$$mod_R(K-d) + mod_R(u-K) < R-1$$

erfüllt, gehört der Netzknoten zu einer isolierten Gruppe von Netzknoten. C1a) Wenn K = d ist, ist der Netzknoten mit der CNN K der äußere Endknoten. Dieser setzt eine Marke "EdgeNodeClosedLoopOI" und schaltet eine Schleife nach der unten beschriebenen Auswertung von gesetzten Marken vom äußeren auf den inneren Ring, sofern diese nicht schon besteht. C1b) Wenn K = u ist, ist der Netzknoten mit der CNN K der innere Endknoten. Dieser setzt eine Marke "EdgeNodeClosedLoopIO" und schaltet eine Schleife nach der unten beschriebenen Auswertung von gesetzten Marken vom inneren auf den äußeren Ring, sofern diese nicht schon besteht.
C2) Wenn der Netzknoten mit der CNN K nicht die Bedingung

$$mod_R(K-d) + mod_R(u-K) < R-1$$

erfüllt, gehört der Netzknoten nicht zu einer isolierten Gruppe von Netzknoten aber zu einem Subsystem.

C2a) Wenn K = $mod_R(d-1)$ ist, ist der Netzknoten mit der CNN K der benachbarte Netzknoten des äußeren Endknotens der isolierten Gruppe. Dieser setzt eine Marke "NeighbourClosedLoopIO" und schaltet eine Schleife nach der unten beschriebenen Auswertung von gesetzten Marken vom inneren auf den äußeren Ring, sofern diese nicht schon besteht.

C2b) Wenn K = $mod_R(u+1)$ ist, ist der Netzknoten mit der CNN K der benachbarte Netzknoten des inneren Endknotens der isolierten Gruppe. Dieser setzt eine Marke "NeighbourClosedLoopOI" und schaltet eine Schleife nach der unten beschriebenen Auswertung von gesetzten Marken vom äußeren auf den inneren Ring, sofern diese nicht schon besteht.

Nachdem eine Statustabelle in den Netzknoten ausgewertet und verschiedene Marken gesetzt worden sind, werden die jeweiligen Marken interpretiert. Wenn die Marke "DuplexLineBreakIO" oder "DuplexLineBreakOI" gesetzt und noch keine Schleife geschaltet worden ist, wird als nächstes die Schleifenaktion vorgenommen. Anschließend wird die Marke "loopbackIOdone" oder "loopbackOIdone" gesetzt.
Wenn die Marke "EdgeNodeClosedLoopOI" oder "EdgeNodeClosedLoopIO" gesetzt und eine entsprechende Schleifenaktion bisher nicht durchgeführt worden ist, wird die entsprechende Schleife geschaltet und die Marke "loopbackIOdone" oder "loopbackOIdone" gesetzt. Über diese Aktion sind die oder werden die übrigen Knoten schon durch die Meldung erster Art informiert.
Wenn die Marke "NeighbourIsolatedNodeOI", "NeighbourIsolatedNodeIO", "NeighbourClosedLoopOI" oder "NeighbourClosedLoopIO" gesetzt und eine entsprechende Schleifenaktion bisher nicht durchgeführt worden ist, sendet der betreffende Netzknoten eine Meldung zweiter Art, welche die jeweilige Schleifenaktion beschreibt, an alle anderen erreichbaren Netzknoten. Es wird dann die Schleife geschaltet und die Marke "loopbackIOdone" oder "loopbackOIdone" gesetzt.
Wenn die Marke "CurrentNodeIsolated" gesetzt ist und der betreffende Netzknoten noch keine Schleifenaktion durchgeführt hat, wird dies unter der Voraussetzung, daß der Netzknoten nicht außer Funktion ist (Knotenausfall), nachgeholt.
Der oben angegebene Auswerteprozeß kann auch auf mehr als zwei Leitungsbrüche angewendet werden. Wenn U = Ø ist, sind alle Leitungsbrüche auf dem äußeren Ring aufgetreten. Es wird dann, falls bisher noch nicht durchgeführt, in dem betreffenden Netzknoten eine Schleife vom äußeren zum inneren Ring geschaltet und eine Marke "loopbackOIdone" gesetzt. Wenn D = Ø ist, sind alle Leitungsbrüche auf dem inneren Ring aufgetreten. Es wird dann, falls bisher noch nicht durchgeführt, in dem betreffenden Netzknoten eine Schleife vom inneren zum äußeren Ring geschaltet und eine Marke "loopbackIOdone" gesetzt.
Falls Leitungsbrüche auf dem inneren und äußeren Ring vorhanden sind, gibt es die Mengen U = {$u_1$, $u_2$, ..., $u_m$} und D = {$d_1$, $d_2$, ..., $d_n$}. In jedem Netzknoten mit der CNN K, K ∈ {0, 1, 2 R-1}, werden

$$S_{min} := 2\,R,\ i0 = 2\,R,\ j0 = 2\,R$$

gesetzt und dann werden alle Paare $(u_i, d_j)$ untersucht.

Für alle Paare $(u_i, d_j)$, wobei $1 \le i \le m$, $1 \le j \le n$, ergeben sich in ähnlicher Weise wie bei zwei Leitungsbrüchen die folgenden drei Fälle A, B und C:

A) Im ersten Fall, wenn $u_i = d_j$ ist, ist der Netzknoten mit CNN $u_i = d_j$ isoliert.

A1) Wenn $K = u_i = d_j$ ist, ist der Netzknoten mit der CNN K der isolierte Netzknoten, in dem eine Marke "CurrentNodeIsolated" gesetzt wird.

A2) Wenn $K = mod_R(u_i+1)$ ist, ist der Netzknoten mit der CNN K der benachbarte Netzknoten in Zellstromrichtung auf dem inneren Ring, in dem eine Marke "NeighbourIsolatedNodeOI" gesetzt wird. Dieser Netzknoten mit der CNN K schaltet eine Schleife nach der Markenauswertung vom äußeren auf den inneren Ring, falls diese noch nicht besteht.

A3) Wenn $K = mod_R(d_j-1)$ ist, ist der Netzknoten mit der CNN K der benachbarte Netzknoten in Zellstromrichtung auf dem äußeren Ring, in dem eine Marke "NeighbourIsolatedNodeIO" gesetzt wird. Falls noch keine Schleife besteht, schaltet der Netzknoten mit der CNN K eine Schleife nach der Markenauswertung vom inneren auf den äußeren Ring.

B) Im zweiten Fall sei $mod_R(u_i+1) = d_j$, d.h. es liegt mindestens ein doppelter Leitungsbruch vor.

B1) Wenn $K = d_j$ ist, setzt der Netzknoten mit der CNN K eine Marke "DuplexLineBreakOI". Dieser Netzknoten schaltet eine Schleife nach der Markenauswertung vom äußeren auf den inneren Ring, falls diese noch nicht besteht.

B2) Wenn $K = u_i$ ist, setzt der Netzknoten mit der CNN K eine Marke "DuplexLineBreakIO". Dieser Netzknoten schaltet eine Schleife nach der Markenauswertung vom inneren auf den äußeren Ring, falls diese noch nicht besteht.

C) Im dritten Fall liegt eine isolierte Gruppe von Netzknoten vor. Zuerst muß jeder Netzknoten die Gleichung

$$S(i, j) = mod_R(K-d_j) + mod_R(u_i-K)$$

berechnen. Anschließend wird $S_{min} := S(i, j)$, $i0 := i$ und $j0 := j$ gesetzt, wenn $S(i, j) < S_{min}$ ist. $S(i, j)$ dient zur Bestimmung der kleinsten, isolierten Gruppe, die K enthält.

C1) Wenn der Netzknoten mit der CNN K die Bedingung

$$mod_R(K-d_j) + mod_R(u_i-K) < R-1$$

erfüllt, gehört der Netzknoten zu einer bestimmten isolierten Gruppe von Netzknoten.

C1a) Wenn $K = dj$ ist, ist der Netzknoten mit der CNN K der äußere Endknoten der bestimmten isolierten Gruppe. Dieser setzt eine Marke "EdgeNodeClosedLoopOI" und schaltet eine Schleife nach der Markenauswertung vom äußeren auf den inneren Ring, falls diese noch nicht besteht.

C1b) Wenn $K = u_i$ ist, ist der Netzknoten mit der CNN K der innere Endknoten der bestimmten isolierten Gruppe. Dieser setzt eine Marke "EdgeNodeClosedLoopIO" und schaltet eine Schleife nach der Markenauswertung vom inneren auf den äußeren Ring, falls diese noch nicht besteht.

C2) Wenn der Netzknoten mit der CNN K nicht die Bedingung

$$mod_R(K-d_j) + mod_R(u_i-K) < R-1$$

erfüllt, gehört der Netzknoten nicht zu der durch $(u_i, d_j)$ bestimmten isolierten Gruppe von Netzknoten.

C2a) Wenn $K = mod_R(d_j-1)$ ist, ist der Netzknoten mit der CNN K der benachbarte Netzknoten des äußeren Endknotens der bestimmten isolierten Gruppe. Dieser setzt eine Marke "NeighbourClosedLoopIO" und schaltet eine Schleife nach der Markenauswertung vom inneren auf den äußeren Ring, falls diese noch nicht be-

steht.

C2b) Wenn $K = \text{mod}_R(u_i+1)$ ist, ist der Netzknoten mit der CNN K der benachbarte Netzknoten des inneren Endknotens der isolierten Gruppe. Dieser setzt eine Marke "NeighbourClosedLoopOI" und schaltet eine Schleife nach der Markenauswertung vom äußeren auf den inneren Ring, falls diese noch nicht besteht.

Nachdem alle Paare $(d_j, u_i)$ nach dem oben genannten Schema untersucht worden sind, bilden die Netzknoten mit den CNN $d_{j0}$, $\text{mod}_R(d_{j0}+1)$, ..., $u_{i0}$ unter der Voraussetzung, daß $S_{min} < R\text{-}1$ ist, die kleinste isolierte Gruppe von Netzknoten, welche den Netzknoten mit der CNN K enthalten. Diese Information kann dazu genutzt werden, um neue Verbindungen zwischen wenigstens zwei Teilnehmern abzulehnen, die zwischen Knoten dieser isolierten Gruppe und solche außerhalb der isolierten Gruppe aufgebaut werden sollen.

Nachdem jeweils in einem Netzknoten die zugehörige Statustabelle ausgewertet und verschiedene Marken gesetzt worden sind, werden die jeweiligen Marken auf dieselbe Weise wie in dem Fall von zwei Leitungsbrüchen interpretiert und Meldungen über eine durchgeführte oder durchzuführende Schleifenaktion gesendet.

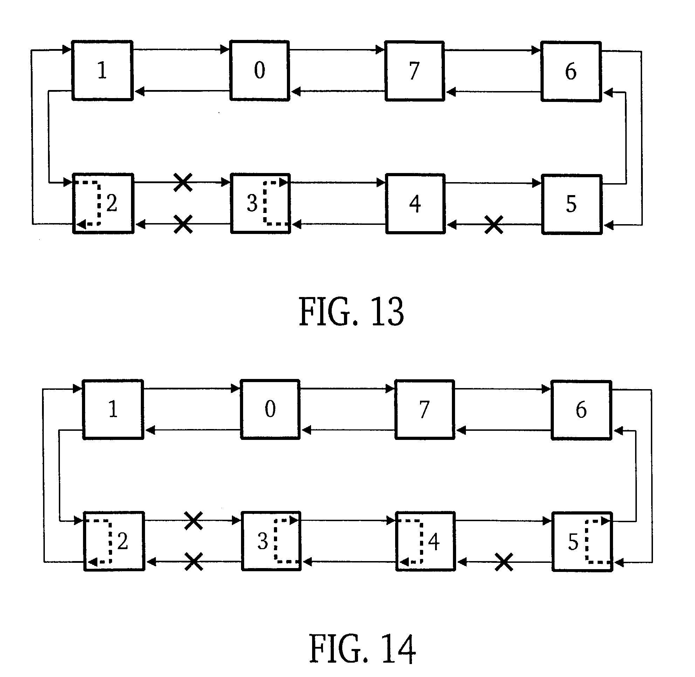

Es wird zuletzt noch ein Beispiel mit acht Netzknoten betrachtet, bei dem zuerst ein Duplex-Leitungsbruch und dann noch ein Simplex-Leitungsbruch auftritt, wie dies in Fig. 13 dargestellt ist. Es ist zuerst ein Leitungsbruch im inneren und äußeren Ring zwischen den Netzknoten mit den CNN 2 und 3 aufgetreten. Dieser Duplex-Leitungsbruch ist detektiert, ausgewertet und entsprechende Schleifen in den Netzknoten mit den CNN 2 und 3 geschaltet worden. Anschließend ist eine einzelne Leitung im äußeren Ring zwischen den Netzknoten mit den CNN 4 und 5 gebrochen. Der Netzknoten 4 detektiert den Fehler, sendet eine Meldung P10 über einen Fehler mit dem Muster 5, 0, 1 über den äußeren und inneren Ring zu den anderen Netzknoten und fügt dieses Muster seiner Statustabelle hinzu. Die Statustabelle weist dann folgende Einträge auf:

| CNN | innerer Ring (U) | äußerer Ring (D) |
|-----|------------------|------------------|
| 2 | 1 | 0 |
| 3 | 0 | 1 |
| 5 | 0 | 1 |

Es liegen dann die Mengen U = {2} und D = {3, 5} und die Paare $(d_1 = 3, u_1 = 2)$ und $(d_2 = 5, u_1 = 2)$ vor. Im Netzknoten mit der CNN 4 (K = 4) (vgl. Fig. 13) wird für das Paar $(d_1, u_1)$ ermittelt, daß

$$\text{mod}_R(u_1 + 1) = \text{mod}_8(2 + 1) = 3 = d_1$$

ist. Es liegt somit zwischen den Netzknoten mit den CNN 2 und 3 ein Duplex-Leitungsbruch vor. Da die CNN des Netzknotens mit der CNN 4 weder gleich $d_1$ (= 3) noch gleich $u_1$ (= 2) ist, wird von diesem keine weitere Aktion durch-geführt. Für das Paar $(d_2, u_1)$ wird von dem Netzknoten mit der CNN 4 ermittelt, daß die Netzknoten mit den CNN 5, 6, 7, 0, 1, 2 zu einer isolierten Gruppe von Netzknoten gehören. Der Netzknoten mit der CNN 4 ist nicht ein Bestandteil der isolierten Gruppe von Netzknoten, weil

$$\text{mod}_R(K\text{-}d_2) + \text{mod}_R(u_1\text{-}K) = \text{mod}_8(4\text{-}5) + \text{mod}_8(2\text{-}4) = 13 < 7 = R\text{-}1$$

nicht erfüllt ist. Jedoch setzt der Netzknoten mit der CNN 4 die Marke "NeighbourClosedLoopIO", weil $K = \text{mod}_R(d_2\text{-}1) = \text{mod}_8(5\text{-}1) = 4$ ist.

Nachdem die Statustabelle ausgewertet worden ist, werden die gesetzten Marken betrachtet. Der Netzknoten mit der CNN 4 stellt fest, daß die Marke "NeighbourClosedLoopIO" gesetzt ist, aber nicht die Marke "LoopbackIOdone". Daraufhin wird ein Eintrag 4, 1, 0 der Statustabelle hinzugefügt, eine Meldung P11 über eine Schleifenaktion mit dem Muster 4, 1, 0 gesendet, eine Schleife von dem inneren zum äußeren Ring geschaltet (vgl. Fig. 14) und die Marke "LoopbackIOdone" gesetzt. Die Statustabelle des Netzknotens mit der CNN 4 weist dann folgende Einträge auf:

| CNN | innerer Ring (U) | äußerer Ring (D) |
|-----|------------------|------------------|
| 2 | 1 | 0 |
| 3 | 0 | 1 |
| 4 | 1 | 0 |

(fortgesetzt)

| CNN | innerer Ring (U) | äußerer Ring (D) |
|-----|------------------|------------------|
| 5   | 0                | 1                |

Nachdem der Netzknoten mit der CNN 5 (K = 5) die Meldung P10 erhalten hat, weist seine Statustabelle die oben angegebenen drei Einträge auf. Für das Paar $(d_1, u_1)$ wird wie bei dem Netzknoten mit der CNN 4 ermittelt, daß

$$\mathrm{mod}_R(u_1 + 1) = \mathrm{mod}_8(2+1) = 3 = d_1$$

ist. Da die CNN des Netzknotens mit der CNN 5 weder gleich $d_1$ (= 3) noch gleich $u_1$ (= 2) ist, wird für dieses Paar keine weitere Aktion durchgeführt. Für das Paar $(d_2, u_1)$ wird von dem Netzknoten mit der CNN 5 ermittelt, daß dieser zu der isolierten Gruppe von Netzknoten mit den CNN 5, 6, 7, 0, 1, 2 gehört, da

$$\mathrm{mod}_R(K-d_2) + \mathrm{mod}_R(u_1-K) = \mathrm{mod}_8(5-5) + \mathrm{mod}_8(2-5) = 5 < 7 = R-1$$

ist. Da K = $d_2$ ist, ist der Netzknoten mit der CNN 5 der äußere Endknoten der isolierten Gruppe und setzt daher die Marke "EdgeClosedLoopOI". Anschließend wird in diesem Netzknoten eine Schleife von dem äußeren zum inneren Ring geschaltet (vgl. Fig, 14) und die Marke "loopbackOIdone" gesetzt.

Nachdem der Netzknoten mit der CNN 5 die Meldung P11 von dem Netzknoten mit der CNN 4 erhalten hat, wird das in der Meldung P11 enthaltene Muster seiner Statustabelle hinzugefügt. Die Auswertung der Tabelle mit den vier Einträgen und die Betrachtung der gesetzen Marken ergibt, daß eine weitere Aktion nicht durchgeführt werden muß, da eine Schleife schon geschaltet ist.

Die Auswertung der jeweiligen Statustabelle der Netzknoten mit den CNN 6, 7, 0, 1 und 2 nach Empfang der Meldung P10 ergibt, daß diese Netzknoten zu einer isolierten Gruppe gehören und keine Schleifenaktion notwendig ist. Der Netzknoten mit der CNN 2 stellt nach der Auswertung des Duplex-Leitungsbruches zusätzlich fest, daß er der innere Netzknoten der isolierten Gruppe ist, und setzt daraufhin die Marke "EdgeNodeClosedLoopIO". Nach Empfang der Meldung P11 wird das darin enthaltene Pattern den Statustabellen der Netzknoten der isolierten Gruppe hinzugefügt. Die Auswertung der Statustabelle ergibt, daß keine weitere Schleifenaktion erforderlich sind. Die verschiedenen Schleifen, welche nach dem Rekonfigurierungsprozeß gebildet worden sind, können der Fig. 14 entnommen werden.

**Patentansprüche**

1. Lokales nach dem asynchronen Transfermodus (ATM) arbeitendes Netzwerk zur Übertragung von Zellen mit mehreren Netzknoten, die jeweils zur Schaltung einer Schleife bei einem Defekt einer zugeordneten Sendeleitung (18, 22) oder eines benachbarten Netzknotens vorgesehen sind,
   dadurch gekennzeichnet,
   daß ein einen Defekt detektierender Netzknoten zur Sendung einer Zelle mit einer Meldung erster Art über den Ort des Defekts an alle anderen betroffenen Netzknoten vorgesehen ist,
   daß der den Defekt detektierende und jeder die Meldung erster Art empfangende Netzknoten zur Eintragung des Ortes des Defekts in einer jeweils zugeordneten Statustabelle vorgesehen ist und daß nach Auswertung der jeweiligen Statustabelle in einem Netzknoten die Netzknoten zur Schaltung einer Schleife vorgesehen sind, die aufgrund des Defekts nicht weiter zum Austausch von Zellen mit einem benachbarten Netzknoten dienen oder deren Sendeleitung (18, 22) einen Defekt aufweist.

2. Lokales Netzwerk nach Anspruch 1,
   dadurch gekennzeichnet,
   daß ein Netzknoten zur Detektion einer keine Zellen mehr liefernden Empfangsleitung (15, 19) und zur Sendung einer Meldung erster Art vorgesehen ist, die Angaben über den Netzknoten, der eine keine Zellen mehr liefernde Sendeleitung (18, 22) aufweist, und über den Ring, zu welchem die keine Zellen mehr übertragende Sendeleitung (18, 22) gehört, enthält.

3. Lokales Netzwerk nach Anspruch 1,
   dadurch gekennzeichnet,

daß ein Netzknoten nach Auswertung seiner zugeordneten Statustabelle zur Schaltung einer Schleife vom inneren zum äußeren Ring vorgesehen ist, wenn die zugeordnete Sendeleitung (18, 22) des inneren Rings keine Zellen mehr liefert und zur Schaltung einer Schleife vom äußeren zum inneren Ring vorgesehen ist, wenn die zugeordnete Sendeleitung (18, 22) des äußeren Rings keine Zellen mehr liefert.

4. Lokales Netzwerk nach Anspruch 1,
   dadurch gekennzeichnet,
   daß ein Netzknoten nach Auswertung seiner zugeordneten Statustabelle zur Schaltung einer Schleife vom inneren zum äußeren Ring vorgesehen ist, wenn über die zugeordnete Empfangsleitung (15, 19) des äußeren Rings von einem benachbarten Netzknoten keine Zellen mehr lieferbar und auch von dem benachbarten Netzknoten über andere Netzknoten keine Zellen zu empfangen sind, und zur Schaltung einer Schleife vom äußeren zum inneren Ring vorgesehen ist, wenn über die zugeordnete Empfangsleitung (15, 19) des inneren Rings von einem benachbarten Netzknoten keine Zellen mehr lieferbar und von dem benachbarten Netzknoten über andere Netzknoten keine Zellen zu empfangen sind.

5. Lokales Netzwerk nach Anspruch 1,
   dadurch gekennzeichnet,
   daß ein Netzknoten zur Sendung einer Meldung zweiter Art über eine vorzunehmende oder vorgenommene Schaltung einer Schleife im Netzknoten vorgesehen ist, wenn wenigstens ein anderer Netzknoten über diese Information nicht verfügt, und daß die Meldung zweiter Art Angaben über den Netzknoten und über den Ring aufweist, der aufgrund der Schaltung der Schleife nicht weiter zur Weiterleitung von Zellen dient.

6. Lokales Netzwerk nach Anspruch 1,
   dadurch gekennzeichnet,
   daß ein Netzknoten

   - zum Empfang einer Meldung zweiter Art über eine vorzunehmende oder vorgenommene Schaltung einer Schleife in einem anderen Netzknoten,
   - zur Eintragung der Angaben über den anderen Netzknoten und über dessen Sendeleitung (18, 22), die aufgrund der Schaltung der Schleife nicht weiter zur Weiterleitung von Zellen dient, in die zugeordnete Statustabelle und
   - zur Auswertung der zugeordneten Statustabelle vorgesehen ist.

7. Lokales Netzwerk nach Anspruch 1,
   dadurch gekennzeichnet,
   daß ein Netzknoten (5) eine Koppelvorrichtung (6) zur Weiterleitung von empfangenen Zellen und eine Steueranordnung (8) wenigstens zur Steuerung der Koppelvorrichtung (6) und zur Änderung und Auswertung der Statustabelle enthält.

EP 0 871 344 A2

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14